Europäisches Patentamt

European Patent Office

Office européen des brevets

(11) Publication number: **0 239 099**
**A2**

## EUROPEAN PATENT APPLICATION

(21) Application number: 87104424.4

(22) Date of filing: 25.03.87

(51) Int. Cl.⁴: **C09J 7/00** , **C09J 3/16** , **C08J 5/12** , **C09J 5/06**

(30) Priority: 26.03.86 JP 68054/86

(43) Date of publication of application:
30.09.87 Bulletin 87/40

(84) Designated Contracting States:
DE FR GB

(71) Applicant: **Toray Silicone Company, Ltd.**
**8, 2-chome Muro-machi Nihonbashi**
**Chuo-ku Tokyo 103(JP)**

(72) Inventor: **Shinmi, Hideo**
**535, Yamadabashi**
**Ichihara-shi, Chiba Prefecture(JP)**
Inventor: **Suganuma, Noriyuki**
**6, 1-chome, Yushudai Nishi**
**Ichihara-shi Chiba Prefecture(JP)**

(74) Representative: **Spott, Gottfried, Dr. et al**
**Patentanwälte Spott und Puschmann**
**Sendlinger-Tor-Platz 11**
**D-8000 München 2(DE)**

(54) Roll-wound adhesive.

(57) A roll-wound adhesive is formed of a laminate of a layer of thermally cured silicone rubber adhesive which is plastic at room temperature and a base layer capable of releasing said silicone rubber adhesive. A method of adhering silicone-coated fabrics to each other consists of overlaying a layer of the laminate over a silicone-coated fabric, pressing to obtain adhesion, removing the base layer, applying a second silicone-coated fabric over the adhesive layer, pressing, and applying a hot surface over the overlaid region to thermally cure the adhesive layer to give a bond between the two silicone-coated fabrics.

# FIG. 1

## ROLL-WOUND ADHESIVE

The present invention relates to an adhesive, and more specifically to a roll-wound, thermally curable silicone rubber adhesive.

Because silicone rubber adhesives have an excellent heat resistance, durability and weather resistance, they are widely used in those applications requiring such properties.

With regard to such applications, silicone rubber adhesives are frequently used for silicone-coated fabrics in which a silicone composition is coated and cured on a synthetic fiber fabric or an inorganic fiber fabric. They are also widely used as adhesives for adhering silicone rubber moldings together. A number of such adhesives have been proposed (for example, Japanese patent application Laid Open No. 60-69176 [69,176/85] equivalent to U.S. Patent No. 4,613,534, issued Sept. 23, 1986).

However, such silicone rubber adhesives are all pastes, and thus such problems arise that the adherends may slip or peel from each other during the adhesion operation, and that a lengthy period of time is required before the adhesive layer is completely cured. In addition, the prior silicone rubber adhesives require lengthy application operations and, in particular, it is difficult to maintain a constant application thickness.

U.S. Patent application No. 909,645, filed September 22, 1986, by the present inventors, teaches a method of joining silicone-coated fabrics. The method overlaps silicone-coated fabrics with the insertion, at the overlap region, of a silicone rubber adhesive. The silicone rubber adhesive is plastic at room temperature and is a radical-curing type containing organoperoxide, or an addition-curing type containing a platinum catalyst. After insertion, the overlap region is press-adhered and hot cured, or hot-cured during press-adhesion.

The present inventors examined various methods for eliminating the aforementioned problems, and this invention was developed as a result.

This invention relates to a roll-wound adhesive wherein a tape-form laminate, of a layer of thermally cured silicone rubber adhesive which is plastic at room temperature and a base layer capable of releasing the layer of silicone rubber adhesive, is wound in roll form on a cylindrical roll core.

An object of the present invention is to provide a very workable adhesive in a form which is simple to handle and easy to apply.

Figure 1 is a perspective view of the roll-wound adhesive laminate in which the adhesive is inside the base layer.

Figure 2 is a perspective view of the roll-wound adhesive laminate in which the adhesive is outside the base layer.

This invention relates to a roll-wound adhesive wherein a tape-form laminate, consisting of (a) a layer of thermally curable, silicone rubber adhesive which is plastic at room temperature, and (b) a base layer capable of releasing said silicone rubber adhesive, is wound in roll form on a cylindrical roll core.

This invention relates to a method of adhering silicone-coated fabrics to each other consisting essentially of (1) bringing into contact with the overlaying on the surface of a first silicone-coated fabric, a tape-form laminate which consists of (a) a layer of thermally curable silicone rubber adhesive which is plastic at room temperature, and (b) a base layer capable of releasing said silicone rubber adhesive, so that the silicone rubber adhesive layer is in contact with the surface of the silicone-coated fabric, to create an overlaid region, (2) pressing the overlaid region with a roll to cause the adhesive layer to bond to the silicone-coated fabric in the overlaid region, (3) peeling the base layer off the adhesive layer, (4) overlaying a second silicone-coated fabric over the adhesive at the overlaid region, (5) pressing the overlaid region with a roll to cause the adhesive layer to bond the the second silicone-coated fabric, then, (6) applying a hot surface over the overlaid region to thermally cure the adhesive layer, to bond silicone-coated fabrics to each other.

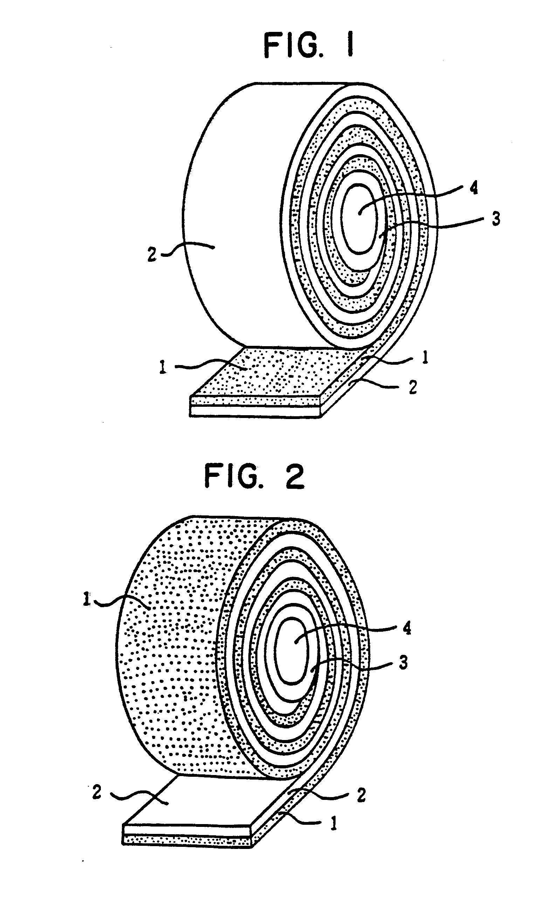

The roll-wound adhesive of the present invention is an adhesive in which a tape-form laminate, said laminate being composed of a layer of silicone rubber adhesive (shown as 1 in Figures 1 and 2) which is plastic at room temperature and a base layer (shown as 2 in Figures 1 and 2) which is capable of releasing said silicone rubber adhesive, is wound in roll form on a cylindrical roll core (shown as 3 in figures 1 and 2). As a consequence, it is easy to handle, the silicone rubber adhesive can be accurately inserted in a uniform thickness between adherends by a simple application operation, application of the adhesive is simple, and a uniform and stable adhesive strength is obtained. Also, because the adhered region has a very high resistance to shear stress after the silicone rubber adhesive has been interposed between the adherends, properties are obtained which are not found in prior adhesives, namely, the entire article being subjected to the adhesion operation can be moved without any provisions such as, for example a temporary fastening, and thermal curing can be executed at any arbitrary time.

Accordingly, the roll-wound adhesive of the invention is very useful for adhering silicone-coated fabrics to each other, or for adhering silicone rubbers to each other.

By way of explanation of the invention, the silicone rubber adhesive used in the present invention is to be plastic at room temperature. While its plasticity is not specifically restricted, the plasticity number is preferably 170-600 as measured by a Williams plastometer according to JIS C-2123 (ASTM D-926). Thus, when the plasticity is less than 170, the adherends will slip from each other during the adhesion operation, or release from the releasable base layer will be difficult. When the plasticity exceeds 600, the adhesive will tend to have a reduced contact adhesion for the adherends. Preferred is a Williams plasticity number of from 200 to 400.

Such silicone rubber adhesives which are plastic at room temperature encompass addition reaction-curing silicone rubber compositions which contain a platinum-type catalyst, as well as organoperoxide-containing silicone rubber compositions which cure by a radical reaction. Typical examples of the former are compositions which contain the following as principal components: diorganopolysiloxane gum having silicon-bonded alkenyl groups, organohydrogenpolysiloxane, platinum-type catalyst and reinforcing filler. They may also contain one or two or more additional components selected from among extender fillers, addition-reaction retarders, heat stabilizers, flame retardants and pigments, etc.

In this regard, the diorganopolysiloxane having silicon-bonded alkenyl groups is exemplified by dimethylvinylsiloxy-terminated dimethylpolysiloxane gums, dimethylallylsiloxy-terminated dimethylpolysiloxane gums, phenylmethylvinylsiloxy-terminated diphenylsiloxane-dimethylsiloxane copolymer gums, dimethylvinylsiloxy-terminated methylvinylsiloxane-dimethylsiloxane copolymer gums, and silanol-terminated methylvinylsiloxane-dimethylsiloxane copolymer gums.

The organohydrogenpolysiloxanes are exemplified by trimethylsiloxy-terminated methylhydrogenpolysiloxanes, trimethylsiloxy-terminated dimethylsiloxane-methylhydrogensiloxane copolymers, dimethylphenylsiloxy-terminated methylphenylsiloxane-methylhydrogensiloxane copolymers, methylhydrogenpolysiloxane cyclics, and copolymers composed of the dimethylhydrogensiloxy unit and the $SiO_{4/2}$ unit.

The platinum-type catalysts are exemplified by platinum black, chloroplatinic acid, platinum tetrachloride, olefin complexes of chloroplatinic acid, chloroplatinic acid-methylvinylsiloxane complexes, rhodium compounds and palladium compounds.

The reinforcing fillers are exemplified by dry-method silicas, wet-method silicas, these silicas which have been hydrophobicized with organohalosilane or organosilazane, etc., and carbon black.

The latter organoperoxide-containing, radical reaction-curing silicone rubber adhesives which are plastic at room temperature are exemplified by compositions of diorganopolysiloxane gum, organoperoxide and reinforcing filler as the principal components, along with 1 or 2 or more additional components selected from among extender fillers, heat stabilizers, flame retardants and pigments, etc.

In this regard, the diorganopolysiloxane gum is exemplified by gums in which both terminals are blocked by the trimethylsiloxy, dimethylvinylsiloxy, methylphenylvinylsiloxy or silanol group, and whose main chain consists of dimethylpolysiloxane, dimethylsiloxane-methylphenylsiloxane copolymer, dimethylsiloxane-diphenylsiloxane copolymer or dimethylsiloxane-methylvinylsiloxane copolymer.

The organoperoxides are exemplified by benzoyl peroxide, p-chlorobenzoyl peroxide, di-t-butyl peroxide, 2,5-dimethyl-2,5-di(t-butylperoxy)hexane and dicumyl peroxide.

The reinforcing fillers are exemplified as above.

It is decisively important in the present invention that the thickness of said silicone rubber adhesive layer be uniform. The thickness is not in itself specifically restricted, but is preferably in the range of 0.1 to 5.0 mm for the following reasons. At below 0.1 mm, the adhesion for adherends with rough surfaces tends to decline. When the adhesive layer is thicker than 5.0 mm, it is too thick, and the adhesive strength is reduced and a large creep is evidenced due to stress concentration at the adhesion interface. The width is not specifically restricted.

The releasable base material used in the present invention is essential for obtaining a constant thickness for the aforementioned silicone rubber adhesive, and for making the application of the adhesive of the present invention easy. Said releasable base material must be releasable to such a degree that the silicone rubber adhesive will adhere to its surface, while the base material can still be easily peeled off when necessary. The reason for this is that in the adhesion operation the releasable base material must be easily released from the silicone rubber adhesive layer after the silicone rubber adhesive layer has been brought into contact with and contact adhered on the adherend.

The material constituting the releasable base is not specifically restricted, and is exemplified by paper, plastics, metals and their composites.

Also, while its thickness is not specifically restricted, it is preferably in the range of 4 micrometers to 300 micrometers thick. Handling is difficult when the film is less than 4 micrometers thick. At thicknesses exceeding 300 micrometers, the material becomes stiff, and the film becomes difficult to wind up in roll form.

It is advantageous for the width of the base material to be equal to or slightly larger than the width of the silicone rubber adhesive in order to facilitate peeling of the releasable base from the silicone rubber adhesive layer. Furthermore, one surface may be treated with a base coat so the releasabilities for the silicone rubber adhesive of the two surfaces of the releasable base material will be different.

The tape-form laminate constituted of the aforementioned silicone rubber adhesive layer and base layer capable of releasing said silicone rubber adhesive is to be wound into a roll. The core used in the present invention must have a strength and shape appropriate for supporting said laminate. A cylindrical shape is preferred because it is light, advantageous in terms of strength and also easy to handle. The core material is not specifically restricted, and examples are various plastics, paper, wood and metals. Also, as necessary, a guide with a radius equal to the thickness of the roll of tape-form laminate may be installed on the outside of the roll core to provide for the support and easy unwinding of said tape-form laminate.

The roll-wound adhesive of the present invention is readily produced by extruding the silicone rubber adhesive onto the base from an appropriately dimensioned nozzle, and this combination is then wound up on the cylindrical roll core. Alternatively, the silicone rubber adhesive may be laminated in the prescribed thickness on the base layer using a calendar roll, and the tip of the base layer is then attached to the cylindrical roll core followed by wind up.

The roll-wound adhesive of the present invention can be used, for example, as follows. The tape-form laminate constituted of the silicone rubber adhesive layer and base layer capable of releasing said silicone rubber adhesive is unwound from the roll-wound adhesive of the present invention, the layer of adhesive is brought into contact with and overlaid on the surface of the adherend, the overlaid region is pressed with a roll, etc., and the base material is then peeled off. The adhesion region of the other adherend is then overlaid on the silicone rubber adhesive which now rests on the first adherend, and the region of overlap is then pressed with a roll, etc. Finally, a hot iron is applied to the overlap region, or this region is inserted between hot plates, in order thermally to cure the adhesive. As a result, the two adherend sheets will be firmly adhered to each other to give an integral body.

The following examples are included for illustrative purposes only and should not be construed as limiting the invention which is properly set forth in the appended claims. Parts equal parts by weight. The viscosity and plasticity were measured at 25°C. The plasticity was measured using a Williams plastometer according to JIS C-2123 (ASTM D-926).

Reference Example 1 -Preparation of an addition reaction-curing silicone rubber adhesive which is plastic at room temperature

A mixture of 90 parts dimethylvinylsiloxy-terminated dimethylpolysiloxane gum, 10 parts dimethylvinylsiloxy-terminated methylvinylsiloxane-dimethylsiloxane gum with a methylvinylsiloxane unit content of 2.5 mol%, 40 parts dry-method silica hydrophobicized with hexamethyldisilazane (specific surface area equal to 300 $m^2/g$), 1.0 part of a trimethylsiloxy-terminated methylhydrogenpolysiloxane with a viscosity of 30 cP, 0.2 parts chloroplatinic acid-tetramethyldivinyldisiloxane complex (platinum content = 0.5 wt%) and 0.1 part phenylbutynol was mixed to homogeneity to prepare a silicone rubber adhesive with a plasticity of 250.

Reference Example 2 -Preparation of a radical reaction-curing silicone rubber adhesive which is plastic at room temperature

A mixture of 100 parts dimethylvinylsiloxy-terminated dimethylsiloxane-methylvinylsiloxane copolymer gum with a methylvinylsiloxane unit content of 0.20 mol%, 50 parts dry-method silica hydrophobicized with hexamethyldisilazane (specific surface area = 300 $cm^2/g$) and 1.5 parts 50 wt% 2,4-dichlorobenzoylperoxide was kneaded to homogeneity to prepare a silicone rubber adhesive with a plasticity of 280.

Example 1

Figure 1 is a perspective view of one example of the roll-wound adhesive of the present invention. In this case, part of the tape-form laminate of silicone rubber adhesive layer and base layer capable of releasing said silicone rubber adhesive has been unwound.

On the top of polyethylene film tape 2 resides the addition-curing silicone rubber adhesive 1 produced in Reference Example 1 and which is plastic at room temperature. The laminate has been wound in roll form around cylindrical roll core 3 with the silicone rubber adhesive on the inside to give a roll-wound adhesive.

## Example 2

Figure 2 is a perspective view of one example of the roll-wound adhesive of the invention. In this case, part of the tape-form laminate of silicone rubber adhesive layer and base layer capable of releasing said silicone rubber adhesive has been unwound.

On the bottom side of polyester film tape 2 resides the radical reaction-curing silicone rubber adhesive produced in Reference Example 2 and which is plastic at room temperature. This laminate is wound up in roll form around cylindrical roll core 3 with the polyester film on the inside to provide a roll-wound adhesive.

## Example 3

A silicone rubber composition was obtained by mixing the following to homogeneity: 100 parts dimethylvinylsiloxy-terminated dimethylpolysiloxane with a viscosity of 2000 cP, 3.0 parts trimethylsiloxy-terminated dimethylsiloxane-methylhydrogensiloxane copolymer with a viscosity of 20 cP, 0.30 parts chloroplatinic acid-tetramethyldivinyldisiloxane complex (platinum content equal to 0.5 percent by weight), 15 parts dry-method silica hydrophobicized with hexamethyldisilazane (specific surface area equal to 200 $m^2/g$) and 0.50 parts methylbutynol. This was coated on both surfaces of a glass fabric (plain weave, count equal to 24 x 19/25 mm, weight equal to 490 $g/m^2$, thickness equal to 0.50 mm) by knife coating, followed by heating and curing at 170°C for 5 minutes. The resulting silicone rubber-coated glass fabric weighed 830 $g/m^2$ and was 0.80 mm thick.

The silicone rubber adhesive produced in Reference Example 2 was uniformly coated in a thickness of 0.5 mm on a polyester film (6 micrometers thick and 6 cm wide) using a calendar roll, and this was then wound up in roll form on a cylindrical vinyl chloride roll core (outside diameter equal to 5.0 cm, inside diameter equal to 4.0 cm). The laminate of silicone rubber adhesive layer and polyester resin film was unwound from the obtained roll-wound adhesive, the silicone rubber adhesive layer was overlaid in a width of 5 cm along the edge of the aforementioned silicone rubber-coated glass fabric, the overlay was pressed with a hand roll, and the polyester film was then peeled off. Another silicone rubber-coated glass fabric was then overlaid on the strip of silicone rubber adhesive left on the first silicone rubber-coated glass fabric, and the region of overlap was then pressed with a roll (dead load equal to 2.0 kg) in order to press the silicone rubber-coated fabrics together. This region of contact was then inserted between hot plates at 180°C under a pressure of 5 $kg/cm^2$ for 5 minutes in order to cure the silicone rubber adhesive. The silicone rubber-coated glass fabrics were found to be tightly adhered to each other as a consequence. When the tensile strength of the joint was measured according to JIS L-1069, fracture occurred in a region other than the joint region.

## Claims

1. A roll-wound adhesive wherein a tape-form laminate, consisting of
(A) a layer of thermally curable, silicone rubber adhesive which is plastic at room temperature, and
(B) a base layer capable of releasing said silicone rubber adhesive,
is wound in roll form on a cylindrical roll core.

2. The roll-wound adhesive of claim 1 wherein the silicone rubber adhesive which is plastic at room temperature is an organoperoxide-containing, radical reaction-curing silicone rubber adhesive.

3. The roll-wound adhesive of claim 1 wherein the silicone rubber adhesive which is plastic at room temperature is an addition reaction-curing silicone rubber adhesive which contains a platinum-type catalyst.

4. The roll-wound adhesive of claim 1 wherein the layer of silicone rubber adhesive in from 0.1 to 5.0 mm in thickness.

5. The roll-wound adhesive of claim 1 wherein the layer of silicone rubber adhesive has a Williams Plasticity Number of from 200 to 400.

6. The roll-wound adhesive of claim 1 wherein the base layer is a polyethylene film.

7. The roll-wound adhesive of claim 1 wherein the base layer is a polyester film.

8. A method of adhering silicone-coated fabrics to each other consisting essentially of,

(1) bringing into contact with and overlaying on the surface of a first silicone-coated fabric, a tape-form laminate which consists of (a) a layer of thermally curable, silicone rubber adhesive which is plastic at room temperature, and (b) a base layer capable of releasing said silicone rubber adhesive, so that the silicone rubber adhesive layer is in contact with the surface of the silicone-coated fabric, to create an overlaid region,

(2) pressing the overlaid region with a roll to cause the adhesive layer to bond to the silicone-coated fabric in the overlaid region,

(3) peeling the base layer off the adhesive layer,

(4) overlaying a second silicone-coated fabric over the adhesive at the overlaid region,

(5) pressing the overlaid region with a roll to cause the adhesive layer to bond the the second silicone-coated fabric, then,

(6) applying a hot surface over the overlaid region to thermally cure the adhesive layer, to bond silicone-coated fabrics to each other.

# FIG. I

# FIG. 2